# EUROPEAN PATENT SPECIFICATION

(11) **EP 2 750 216 B1**
(45) Date of publication and mention of the grant of the patent: **24.08.2016**
(21) Application number: 13744416.2
(22) Date of filing: 24.06.2013
(51) Int. Cl.: H01M 2/00, B01D 71/26, B01D 69/02, B01D 69/12, B01D 71/32, B01D 71/34, H01M 2/14, H01M 2/16

(54) **BATTERY SEPARATOR**
BATTERIETRENNER
SÉPARATEUR DE BATTERIE

(30) Priority: 16.11.2012 JP 2012252089
(43) Date of publication of application: 02.07.2014
(73) Proprietor: Toray Battery Separator Film Co., Ltd., Tochigi 329-2763 (JP)
(72) Inventor: MIZUNO, Naoki, Tochigi 3292763 (KR); KIMISHIMA, Kohtaro, Tochigi 3292763 (KR)
(74) Representative: Webster, Jeremy Mark
(86) International application number: PCT/JP2013/067173
(87) International publication number: WO 2014/076994

(56) References cited:
- EP-A1- 1 685 955
- EP-A1- 1 693 408
- EP-A1- 1 956 040
- WO-A1-2007/060991
- JP-A- 2003 171 495
- JP-A- 2004 146 190
- JP-A- 2006 120 462
- JP-B1- 4 988 972
- US-A1- 2010 209 757

## Description

### TECHNICAL FIELD

The present invention relates to a battery separator, and particularly relates to a battery separator having high physical stability before the start of shutdown, a high rate of air resistance change after the start of shutdown, excellent heat shrinkage resistance in a temperature range from a shutdown start temperature to a shutdown temperature, and a low shutdown temperature.

### BACKGROUND ART

One of the main uses of microporous polyethylene membranes is battery separators, which have various required properties. In particular, lithium ion battery separators require not only excellent mechanical properties and permeability, but also the property of closing pores upon heat generation in batteries to stop battery reaction (shutdown properties), the property of preventing membranes from breaking at temperatures exceeding shutdown temperatures (meltdown properties), and the like.

As a method of improving the properties of a microporous polyethylene membrane, optimization of material composition, production conditions, and the like have been proposed.

For example, Patent Document 1 proposes a microporous polyolefin membrane having excellent strength and permeability, which is made of a polyolefin composition and have a porosity of 35 to 95%, an average pore size of 0.001 to 0.2 µm, and a rupture strength of 0.2 kg or more per 15-mm width, the polyolefin composition containing 1 % by weight or more of ultra-high-molecular-weight polyolefin with a mass average molecular weight (Mw) of 7 × 10⁵ or more and having a molecular weight distribution [mass average molecular weight/number average molecular weight (Mw/Mn)] of 10 to 300.

Patent Document 2 proposes a microporous polyolefin membrane comprising polyethylene and polypropylene with a mass average molecular weight of 5 × 10⁵ or more and a heat of fusion of 90 J/g or more (measured by a differential scanning calorimeter). The microporous polyolefin membrane of Patent Document 2 has a shutdown temperature of 120 to 140°C and a meltdown temperature of 165°C or higher and has excellent mechanical properties and permeability.

Patent Document 3 discloses a microporous polyethylene membrane having high short-circuit resistance (shutdown properties), which is made of high density polyethylene or linear polyethylene copolymer having a terminal vinyl group content of two or more per 100,000 carbon atoms measured by infrared spectroscopy, and has a fuse temperature (shutdown temperature) of 131 to 136°C.

However, when a runaway reaction occurs in batteries, separators shrink in a temperature range from the start of shutdown to the end of shutdown, causing a short circuit at their end portions, which accelerates the runaway reaction. However, the microporous membranes described in Patent Documents 1 to 3 do not have a sufficient property of keeping their shapes and preventing a short circuit in a temperature range from a shutdown start temperature to a shutdown temperature (heat shrinkage resistance).

As a technique for improving heat shrinkage resistance better than Patent Documents 1 to 3, Patent Document 4 discloses a microporous polyolefin membrane comprising a polyethylene resin and having (a) a shutdown temperature of 135°C or lower, (b) a rate of air resistance change of 1 × 10⁴ sec/100 cc/°C or more, and (c) a transverse shrinkage rate at 130°C of 20% or less, but further improvement of heat shrinkage resistance is demanded.

On the other hand, battery separators also require improved adhesion to electrode material (adhesion to electrode) in order to improve battery cycle characteristics. Since the adhesion improvement by a microporous polyolefin membrane alone is limited, lamination of a porous layer (a layer comprising a resin that provides or improves at least one function such as heat resistance, adhesion to electrode material, or the like, which hereinafter may be referred to as a modifying porous layer) comprising a resin having the functions described above (which hereinafter may be referred to as a functional resin) on the microporous polyolefin membrane has been studied.

As a modifying porous layer, polyamide-imide resins, polyimide resins, and polyamide resins, which have excellent heat resistance, fluorine resins which have both heat resistance and adhesion to electrode, and the like have been suitably used. However, when such a modifying porous layer is laminated simply on a microporous polyolefin membrane, the resin component contained in the modifying porous layer infiltrates into pores of the microporous polyolefin membrane, and the decrease in shutdown properties cannot be avoided.

For example, Patent Document 5 discloses a lithium ion secondary battery separator obtained by applying a polyamide-imide resin to a commercially available separator (microporous polyolefin membrane from Tonen Chemical Corporation: 25 µm) to a thickness of 1 µm, and immersing the coated separator in water at 25°C, followed by drying. The lithium ion secondary battery separator had poor shutdown properties and further poor adhesion to electrodes.

Patent Document 6 discloses a composite porous membrane obtained by immersion of a microporous polypropylene membrane with a thickness of 25.6 µm in a dope mainly composed of polyvinylidene fluoride, followed by the process of a coagulation bath, washing with water, and drying. The composite porous membrane, however, had adhesion to electrodes but had poor shutdown properties.

Thus, at present, there are no laminated microporous polyolefin membranes that have both shutdown properties and adhesion to electrode while maintaining the shutdown properties of microporous polyolefin membranes.

### PRIOR ART DOCUMENTS

Patent Document 1: Japanese Patent No. 2132327; Patent Document 2: JP 2004-196870 A; Patent Document 3: WO 1997/23554; Patent Document 4: WO 2007/60991 (and EPA 1956040); Patent Document 5: JP 2005-281668 A and Patent Document 6: JP 2003-171495 A
Further examples of batteries and seperators therefor are provided in the following patent documents: US 2010/209757 and JP 2004 146190A, EP 16934080A and EP1685955A both describe microporous composite membranes that may contain a coating layer composed of fluororesin.

### PROBLEMS TO BE SOLVED BY THE INVENTION

Thus, an object of the present invention is to provide a battery separator having high physical stability before the start of shutdown, a high rate of air resistance change after the start of shutdown, which is an indicator of shutdown speed, excellent heat shrinkage resistance in a temperature range from a shutdown start temperature (temperature at which pores start to be blocked) to a shutdown temperature (temperature at which blocking of pores is substantially completed), a low shutdown temperature, and excellent adhesion to electrode.

### MEANS FOR SOLVING THE PROBLEMS

To solve the problems described above, the present invention has the following constitution.
(1) A battery separator comprising a microporous polyolefin membrane and a modifying porous layer laminated on at least one surface of the microporous polyolefin membrane, the modifying porous layer containing a resin for providing or improving adhesion to electrode material, wherein the microporous polyolefin membrane comprises a polyethylene resin and has (a) a shutdown temperature (temperature at which the air resistance measured according to JIS P 8117 while heating at a temperature rise rate of 5°C/min reaches 1 × 10⁶ sec/100 cc) of 135°C or lower, (b) a rate of air resistance change (a gradient of a curve representing dependency of the air resistance on temperature at an air resistance of 1 × 10⁴ sec/100 cc) of 1 × 10⁴ sec/100 cc/°C or more, and (c) a transverse shrinkage rate at 130°C (measured by thermomechanical analysis under a load of 2 gf and at a temperature rise rate of 5°C/min) of 20% or less, wherein the polyethylene resin shows a total endothermic amount at 125°C that is not more than 20% of the crystal melting heat measured by differential scanning calorimetry at a temperature rise rate of 10°C/min, and a temperature of 135°C or lower when the endothermic amount reaches 50% of the crystal melting heat, wherein the difference between the shutdown temperature of the microporous polyolefin membrane and the shutdown temperature of the battery separator is 2.5°C or less, and wherein the modifying porous layer comprises a fluorine resin and particles selected from inorganic particles and cross-linked polymer particles.
(2) The battery separator according to (1), wherein the polyethylene resin comprises a copolymer of ethylene and other α-olefins.
(3) The battery separator according to (1) or (2), wherein the polyethylene resin comprises a copolymer of ethylene and other α-olefins, and the copolymer is produced using a single-site catalyst and has a mass average molecular weight of not less than 1 × 10⁴ and less than 7 × 10⁶.
(4) The battery separator according to any one of (1) to (3), wherein the modifying porous layer comprises a fluorine resin and inorganic particles.
(5) The battery separator according to any one of (1) to (3), wherein the modifying porous layer comprises a fluorine resin and cross-linked polymer particles.

### EFFECTS OF THE INVENTION

According to the present invention, a battery separator having high physical stability before the start of shutdown, a high rate of air resistance change after the start of shutdown, which is an indicator of shutdown speed, excellent heat shrinkage resistance in a temperature range from a shutdown start temperature to a shutdown temperature, a low shutdown temperature, and, in addition, excellent adhesion to electrode is provided.

### BRIEF DESCRIPTION OF THE DRAWINGS

FIG. 1 is a graph showing a typical example of melting endotherm curves.
FIG. 2 is a graph of the same melting endotherm curve as in FIG. 1 showing a total endothermic amount at 125°C.
FIG. 3 is a graph of the same melting endotherm curve as in FIG. 1 showing a temperature T (50%) at the time when the endothermic amount reaches 50% of crystal melting heat.
FIG. 4 is a graph showing a typical example of temperature T-(air resistance p)⁻¹ curves for determining a shutdown start temperature.
FIG. 5 is a graph showing a typical example of temperature T-air resistance p curves for determining a shutdown temperature, a rate of air resistance change, and a meltdown temperature.

### BEST MODE FOR CARRYING OUT THE INVENTION

In the present invention, a polyolefin resin having particular properties is contained, and a microporous polyolefin membrane with excellent heat resistance and a high rate of air resistance change obtained by a highly-controlled membrane-forming technique is used, whereby even when an modifying porous layer is laminated, increase in shutdown temperature due to infiltration of a resin component in the modifying porous layer can be reduced, and, further, extremely excellent heat resistance is provided by the synergistic effect of the excellent heat resistance of the microporous polyolefin membrane and the heat resistance of the modifying porous layer. Further, a battery separator also having excellent adhesion to electrode can be provided.

The summary of the battery separator of the present invention will now be described, but the present invention is not limited thereto.

The battery separator of the present invention will be described.

As a result of intensive research in view of the object described above, the present inventors focused on the fact that, in the microporous polyolefin membrane used in the present invention, (1) a microporous polyolefin membrane having excellent heat shrinkage resistance in a temperature range from a shutdown start temperature to a shutdown temperature and having a low shutdown temperature can be obtained from a polyolefin resin comprising a polyethylene resin showing a total endothermic amount at 125°C that is not more than 20% of the crystal melting heat measured by differential scanning calorimetry at a predetermined temperature rise rate, and a temperature of 135°C or lower when the endothermic amount reaches 50% of the crystal melting heat, and (2) a microporous polyolefin membrane having high physical stability before the start of shutdown, a high rate of air resistance change after the start of shutdown, excellent heat shrinkage resistance in a temperature range from a shutdown start temperature to a shutdown temperature, and a low shutdown temperature can be obtained by melt-blending a polyolefin resin comprising the above polyethylene resin with a membrane-forming solvent in a twin-screw extruder such that the ratio of a feed rate Q of the polyolefin resin (kg/h) to a screw rotation speed Ns (rpm) (Q/Ns) is 0.1 to 0.55 kg/h/rpm to prepare a polyolefin resin solution, extruding the resulting polyolefin resin solution through a die, cooling the extrudate into a gel-like sheet, and removing the membrane-forming solvent from the gel-like sheet obtained, and the present inventors discovered that by using the microporous polyolefin membrane, an excellent battery separator can be obtained that shows a small decrease in shutdown properties even if a modifying porous layer with excellent heat resistance/ adhesion to electrode is laminated, thereby completing the present invention.

Thus, the microporous polyolefin membrane used in the present invention comprises a polyethylene resin and has (a) a shutdown temperature (a temperature at which the air resistance measured while heating at a temperature rise rate of 5°C/min reaches 1 × 10⁵ sec/100 cc) of 135°C or lower, (b) a rate of air resistance change (a gradient of a curve representing dependency of the air resistance on temperature at an air resistance of 1 × 10⁴ sec/100 cc) of 1 × 10⁴ sec/100 cc/°C or more, and (c) a transverse shrinkage rate at 130°C (measured by thermomechanical analysis under a load of 2 gf and at a temperature rise rate of 5°C/min) of 20% or less.

The microporous polyolefin membrane of the present invention can be produced by (1) melt-blending a polyolefin resin comprising a polyethylene resin with a membrane-forming solvent in a twin-screw extruder, the polyethylene resin showing a total endothermic amount at 125°C that is not more than 20% of the crystal melting heat measured by differential scanning calorimetry at a temperature rise rate of 10°C/min, and a temperature of 135°C or lower when the endothermic amount reaches 50% of the crystal melting heat, such that the ratio of a feed rate Q of the polyolefin resin (kg/h) to a screw rotation speed Ns (rpm) (Q/Ns) is 0.1 to 0.55 kg/h/rpm to prepare a polyolefin resin solution, (2) extruding the polyolefin resin solution through a die and cooling the extrudate to form a gel-like sheet, (3) stretching the gel-like sheet, and then (4) removing the membrane-forming solvent.

The gel-like sheet is preferably stretched at a speed of 1 to 80%/sec per 100% of the length before stretching.

The microporous polyolefin membrane used in the present invention will be described in detail.

### [1] Polyolefin Resin

The polyolefin resin that forms the microporous polyolefin membrane used in the present invention comprises a polyethylene resin described below.

### (1) Crystal Melting Heat of Polyethylene Resin

The polyethylene resin shows a total endothermic amount at 125°C (hereinafter denoted as "ΔHm (≤125°C)") that is not more than 20% of the crystal melting heat ΔHm measured by differential scanning calorimetry (DSC) at a temperature rise rate of 10°C/min, and a temperature when the endothermic amount reaches 50% of the crystal melting heat ΔHm (hereinafter denoted as "T (50%)") of 135°C or lower.

The T (50%) is a parameter affected by the primary structure of polyethylene [homopolymer or ethylene/α-olefin copolymer (the same shall apply hereinafter)] such as molecular weight, molecular weight distribution, degree of branching, molecular weight of branched chains, distribution of branching points, and percentage of copolymers, and by the high-order structure of polyethylene such as size and distribution of crystals and crystal lattice regularity, and is an indicator of shutdown temperature and a rate of air resistance change after the start of shutdown. If the T (50%) is higher than 135°C, the microporous polyolefin membrane exhibits poor shutdown properties and a low overheat shutdown response when used as a lithium battery separator.

The ΔHm (≤125°C) is a parameter affected by molecular weight, degree of branching, and molecular entanglement of polyethylene. A ΔHm (≤ 125°C) of 20% or less and a T (50%) of 135°C or lower provides a microporous membrane having a low shutdown temperature and excellent heat shrinkage resistance in a temperature range from a shutdown start temperature to a shutdown temperature. The ΔHm (≤ 125°C) is preferably 17% or less.

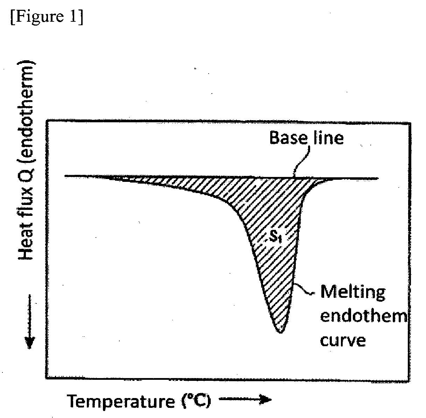

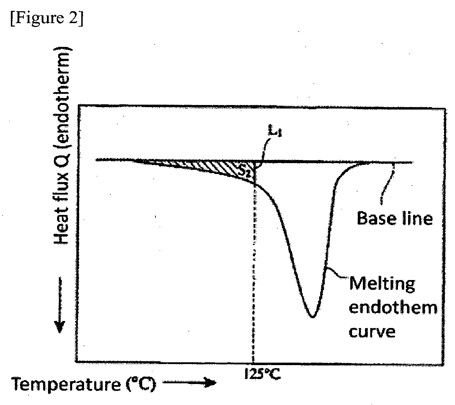

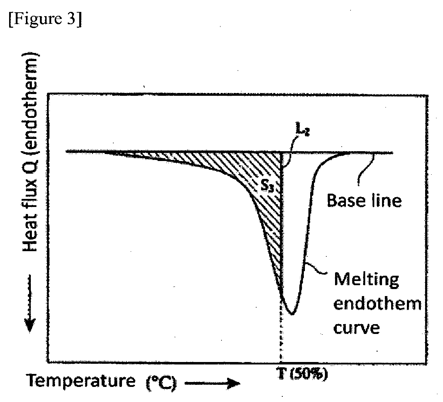

The crystal melting heat of the polyethylene resin (unit: J/g) is determined by the following procedure in accordance with JIS K 7122. First, a sample of the polyethylene resin [a molded product obtained by melt-pressing at 210°C (thickness: 0.5 mm)] is placed in a sample holder of a differential scanning calorimeter (Pyris Diamond DSC available from Perkin Elmer, Inc.), heat-treated at 230°C for 1 minute in an nitrogen atmosphere, cooled to 30°C at 10°C/min, kept at 30°C for 1 minute, and heated to 230°C at a speed of 10°C/min. As shown in FIG. 1, an endothermic amount (unit: J) is calculated from an area S₁ of the region (shown by hatching) enclosed by a DSC curve (melting endotherm curve) obtained through temperature rising and a baseline, and the endothermic amount is divided by the weight (unit: g) of the sample to thereby determine a crystal melting heat. The ΔHm (≤ 125°C) (unit: J/g), as shown in FIG. 2, is a percentage (area %) of an area S₂ in the area S₁, the S₂ being an area of the region (shown by hatching) at the lower temperature side of a straight line L₁ (at 125°C) perpendicular to the baseline. The T (50%), as shown in FIG. 3, is a temperature at which an area S₃ [the area of the region (shown by hatching) at the lower temperature side of a straight line L₂ perpendicular to the baseline] reaches 50% of the area S₁.

### (2) Components of Polyethylene Resin

The polyethylene resin may be a single substance or a composition of two or more polyethylenes as long as its ΔHm (≤ 125°C) and T (50%) are within the above ranges. The polyethylene resin is preferably (a) ultra-high molecular weight polyethylene, (b) polyethylene other than ultra-high molecular weight polyethylene, or (c) a mixture of ultra-high molecular weight polyethylene with polyethylene other than ultra-high molecular weight polyethylene (polyethylene composition). In any case, the mass average molecular weight (Mw) of the polyethylene resin is, though not critical, preferably 1 × 10⁴ to 1 × 10⁷, more preferably 5 × 10⁴ to 15 × 10⁶, and particularly preferably 1 × 10⁵ to 5 ×10⁶.

### (a) Ultra-High Molecular Weight Polyethylene

The ultra-high molecular weight polyethylene has a Mw of 7 × 10⁵ or more. The ultra-high molecular weight polyethylene may be not only an ethylene homopolymer but also an ethylene/α-olefin copolymer containing a small amount of other α-olefins. Preferred examples of α-olefins other than ethylene include propylene, butene-1, pentene-1, hexene-1, 4-methylpentene-1, octene-1, vinyl acetate, methyl methacrylate, and styrene. The Mw of the ultra-high molecular weight polyethylene is preferably 1 × 10⁶ to 15 × 10⁶, and more preferably 1 × 10⁶ to 5 × 10⁶.

### (b) Polyethylene Other Than Ultra-High Molecular Weight Polyethylene

The polyethylene other than ultra-high molecular weight polyethylene has a Mw of not less than 1 × 10⁴ and less than 7 × 10⁵. High density polyethylene, medium density polyethylene, branched low density polyethylene, and linear low density polyethylene are preferred, and high density polyethylene is more preferred. The polyethylene having a Mw of not less than 1 × 10⁴ and less than 7 × 10⁵ may be not only an ethylene homopolymer but also a copolymer containing a small amount of other α-olefins such as propylene, butene-1, and hexene-1. Such a copolymer is preferably produced using a single-site catalyst. The polyethylene other than ultra-high molecular weight polyethylene is not limited to a single substance and may be a mixture of two or more polyethylenes other than ultra-high molecular weight polyethylene.

### (c) Polyethylene Composition

The polyethylene composition is a mixture of ultra-high molecular weight polyethylene with a Mw of 7 × 10⁵ or more and polyethylene other than ultra-high molecular weight polyethylene with a Mw of not less than 1 × 10⁴ and less than 7 × 10⁵ (at least one selected from the group consisting of high density polyethylene, medium density polyethylene, branched low density polyethylene, and linear low density polyethylene). The ultra-high molecular weight polyethylene and the polyethylene other than ultra-high molecular weight polyethylene may be the same as described above. The molecular weight distribution [mass average molecular weight/number average molecular weight (Mw/Mn)] of this polyethylene composition can be easily controlled depending on the intended use. The polyethylene composition is preferably a composition of the above ultra-high molecular weight polyethylene and high density polyethylene. The Mw of the high density polyethylene used in the polyethylene composition is preferably not less than 1 × 10⁵ and less than 7 × 10⁵, more preferably 1 × 10⁵ to 5 × 10⁵, and most preferably 2 × 10⁵ to 4 × 10⁵. The content of the ultra-high molecular weight polyethylene in the polyethylene composition is preferably 1% by mass or more, and more preferably 2 to 50% by mass, based on 100% by mass of the total polyethylene composition.

### (d) Molecular Weight Distribution Mw/Mn

Mw/Mn is a measure of molecular weight distribution, and the larger the value is, the wider the molecular weight distribution is. In every case where the polyethylene resin is one of the (a) to (c) above, the Mw/Mn of the polyethylene resin is, though not critical, preferably 5 to 300, and more preferably 10 to 100. When the Mw/Mn is less than 5, there are excessive high-molecular-weight components, resulting in difficulty in melt extrusion, and when the Mw/Mn is more than 300, there are excessive low-molecular weight components, resulting in a microporous membrane with decreased strength. The Mw/Mn of polyethylene (homopolymer or ethylene/α-olefin copolymer) can be properly controlled by multistage polymerization. The multistage polymerization method is preferably two-stage polymerization in which a high-molecular-weight polymer component is formed at the first stage and a low-molecular-weight polymer component is formed at the second stage. In the case of the polyethylene composition, the larger the Mw/Mn is, the larger the difference in Mw between the ultra-high molecular weight polyethylene and the polyethylene other than ultra-high molecular weight polyethylene is, and vice versa. The Mw/Mn of the polyethylene composition can be properly controlled by the molecular weight and mixing ratio of each component.

The polyethylene resins as described above may be a commercially available product. Examples of the commercially available product include Nipolon Hard 6100A, 7300A, and 5110A (trade name, available from TOSOH CORPORATION); HI-ZEX (registered trademark) 640UF and 780UF (trade name, available from Prime Polymer Co., Ltd.); and the like.

### (3) Addable Other Resins

The polyolefin resin may be a composition containing, together with the polyethylene resin, a polyolefin other than the polyethylene resin or a resin other than polyolefins as long as the effects of the present invention are not impaired. Accordingly, it should be understood that the term "polyolefin resin" includes not only polyolefin but also resin other than polyolefins. The polyolefin other than the polyethylene resin can be at least one selected from the group consisting of polypropylene, polybutene-1, polypentene-1, polyhexene-1, poly-4-methylpentene-1, polyoctene-1, polyvinyl acetate, polymethyl methacrylate, polystyrene, and ethylene/α-olefin copolymer, each having a Mw of 1 × 10⁴ to 4 × 10⁶, and a polyethylene wax having a Mw of 1 × 10³ to 1 × 10⁴. Polypropylene, polybutene-1, polypentene-1, polyhexene-1, poly-4-methylpentene-1, polyoctene-1, polyvinyl acetate, polymethyl methacrylate, and polystyrene may be not only a homopolymer but also a copolymer containing other α-olefins.

Examples of the resin other than polyolefins include a heat resistant resin having a melting point or a glass transition temperature (Tg) of 150°C or higher. The heat resistant resin is preferably a crystalline resin (including partially crystalline resins) having a melting point of 150°C or higher and an amorphous resin having a Tg of 150°C or higher. The melting point and Tg can be measured according to JIS K 7121 (the same shall apply hereinafter).

### [2] Process for Producing Microporous Polyolefin Membrane

The process for producing the microporous polyolefin membrane of the present invention comprises the steps of (1) melt-blending the above polyolefin resin and a membrane-forming solvent to prepare a polyolefin resin solution, (2) extruding the polyolefin resin solution through a die, (3) cooling the extrudate to form a gel-like sheet, (4) removing the membrane-forming solvent, and (5) drying the resulting membrane. In other words, the microporous polyolefin membrane is produced by so-called Wet method. Between the steps (3) and (4), any one of (6) a stretching step, (7) a hot roll treatment step, (8) a hot solvent treatment step, and (9) a heat-setting step can be conducted if necessary. After the step (5), (10) a microporous membrane-stretching step, (11) a heat treatment step, (12) a cross-linking step with ionizing radiation, (13) a hydrophilizing step, (14) a surface-coating step, and the like can be conducted.

### (1) Preparation of Polyolefin Resin Solution

A polyolefin resin solution is prepared by adding an appropriate membrane-forming solvent to a polyolefin resin and then melt-blending the resulting mixture. To the polyolefin resin solution, the various additives described above such as inorganic fillers, antioxidants, UV absorbers, antiblocking agents, pigments, and dyes can be added as required as long as the effects of the present invention are not impaired. For example, fine silicate powder can be added as a pore-forming agent.

The membrane-forming solvent can be a liquid solvent or a solid solvent. Examples of liquid solvents include aliphatic or cyclic hydrocarbons such as nonane, decane, decalin, paraxylene, undecane, dodecane, and liquid paraffin; and mineral oil distillates having a boiling point equivalent to those of these hydrocarbons. To obtain a gel-like sheet with a stable solvent content, it is preferable to use a nonvolatile liquid solvent such as liquid paraffin. The solid solvent preferably has a melting point of 80°C or lower, and examples of such solid solvents include paraffin wax, ceryl alcohol, stearyl alcohol, and dicyclohexyl phthalate. The liquid solvent and the solid solvent may be used in combination.

The viscosity at 25°C of the liquid solvent is preferably 30 to 500 cSt, and more preferably 30 to 200 cSt. When the viscosity at 25°C is less than 30 cSt, foaming is likely to occur, resulting in difficulty in blending. When it is more than 500 cSt, it is difficult to remove the liquid solvent.

The melt-blending method is, though not critical, preferably uniform blending in an extruder. This method is suitable for preparing a high-concentration polyolefin resin solution. The melt-blending temperature is generally from (the melting point Tm of the polyolefin resin + 10°C) to (Tm + 110°C) though it may be properly set depending on components of the polyolefin resin. In cases where the polyolefin resin is (a) ultra-high molecular weight polyethylene, (b) polyethylene other than ultra-high molecular weight polyethylene, or (c) a polyethylene composition, the melting point Tm of the polyolefin resin is a melting point of them, and in cases where the polyolefin resin is a composition containing a polyolefin other than polyethylene or a heat resistant resin, the melting point Tm of the polyolefin resin is a melting point of ultra-high molecular weight polyethylene, polyethylene other than ultra-high molecular weight polyethylene, or a polyethylene composition contained in the composition (the same shall apply hereinafter). The ultra-high molecular weight polyethylene, the polyethylene other than ultra-high molecular weight polyethylene, and the polyethylene composition each has a melting point of about 130 to 140°C. Accordingly, the melt-blending temperature is preferably 140 to 250°C, and more preferably 170 to 240°C. A membrane-forming solvent may be added before the start of blending or may be introduced, during blending, into a twin-screw extruder at an intermediate point, and the latter is preferred. In the melt-blending, it is preferable to add an antioxidant to prevent oxidation of the polyolefin resin.

The extruder is preferably a twin-screw extruder. The twin-screw extruder may be an intermeshing co-rotating twin-screw extruder, an intermeshing counter-rotating twin-screw extruder, a non-intermeshing co-rotating twin-screw extruder, or a non-intermeshing counter-rotating twin-screw extruder. The intermeshing co-rotating twin-screw extruder is preferred because it has a self-cleaning function and can achieve a higher rotation speed with a smaller load than those of counter-rotating twin-screw extruders.

The ratio of the length (L) to the diameter (D) of a screw of the twin-screw extruder (L/D) is preferably in the range of 20 to 100, and more preferably in the range of 35 to 70. An L/D of less than 20 results in insufficient melt-blending. An L/D of more than 100 leads to an excessively prolonged residence time of a polyolefin resin solution. The shape of the screw is not particularly restricted and may be a known shape. The cylinder bore of the twin-screw extruder is preferably 40 to 100 mm.

When introducing the polyolefin resin into the twin-screw extruder, the ratio of a feed rate Q of the polyolefin resin (kg/h) to a screw rotation speed Ns (rpm) (Q/Ns) is preferably 0.1 to 0.55 kg/h/rpm. If the Q/Ns is less than 0.1 kg/h/rpm, the polyolefin resin will experience excessive shear failure, resulting in a low meltdown temperature, which leads to poor rupture resistance during the temperature rising after shutdown. If the Q/Ns is more than 0.55 kg/h/rpm, uniform blending cannot be achieved. The ratio Q/Ns is more preferably 0.2 to 0.5 kg/h/rpm. The screw rotation speed Ns is more preferably 250 rpm or more. The upper limit of the screw rotation speed Ns is, though not particularly restricted, preferably 500 rpm.

The concentration of the polyolefin resin is 10 to 50% by mass, and preferably 20 to 45% by mass, based on 100% by mass of the total of the polyolefin resin and the membrane-forming solvent. If the concentration of the polyolefin resin is less than 10% by mass, productivity decreases, which is not preferred. In addition, large swelling and neck-in occur at the die exit in extruding the polyolefin resin solution, resulting in reduced moldability and self-supportability of an extrudate. If the concentration of the polyolefin resin is more than 50% by mass, moldability of the extrudate is reduced.

### (2) Extrusion

The melt-blended polyolefin resin solution is extruded from an extruder through a die directly or after being pelletized. When using a sheet-forming die having a rectangular orifice, the die generally has a gap of 0.1 to 5 mm, and is heated to 140 to 250°C during extrusion. The extrusion speed of the heated solution is preferably 0.2 to 15 m/min.

### (3) Formation of Gel-Like Sheet

The extrudate from the die is cooled to form a gel-like sheet. The cooling is preferably conducted at least to a gelation temperature at a speed of 50°C/min or higher. Such cooling fixes a structure in which the polyolefin resin is microphase-separated from the membrane-forming solvent (gel structure comprising a polyolefin resin phase and a membrane-forming solvent phase). The cooling is preferably conducted to 25°C or lower. In general, a lower cooling rate results in larger pseudo-cell units, and a resulting gel-like sheet will have a coarse high-order structure, while a higher cooling rate results in denser cell units. A cooling rate of less than 50°C/min increases the crystallization, making it difficult to form a gel-like sheet suitable for stretching. Examples of the cooling method that can be used include contacting with a cooling medium such as cold air or cooling water and contacting with a cooling roll, and the method using a cooling roll is preferred.

The temperature of the cooling roll is preferably from (the crystallization temperature Tc of the polyolefin resin - 120°C) to (Tc - 5°C), and more preferably from (Tc - 115°C) to (Tc - 15°C). When the temperature of the cooling roll is higher than Tc - 5°C, sufficiently rapid cooling cannot be conducted. In cases where the polyolefin resin is (a) the ultra-high molecular weight polyethylene, (b) the polyethylene other than ultra-high molecular weight polyethylene, or (c) the polyethylene composition described above, the crystallization temperature Tc of the polyolefin resin is a crystallization temperature of them, and in cases where the polyolefin resin is a composition containing a polyolefin other than polyethylene or a heat resistant resin, the crystallization temperature Tc of the polyolefin resin is a crystallization temperature of the ultra-high molecular weight polyethylene, the polyethylene other than ultra-high molecular weight polyethylene, or the polyethylene composition contained in the composition (the same shall apply hereinafter). The crystallization temperature herein refers to a value determined according to JIS K 7121. The ultra-high molecular weight polyethylene, the polyethylene other than ultra-high molecular weight polyethylene, and the polyethylene composition generally have a crystallization temperature of 110 to 115°C. Accordingly, the temperature of the cooling roll is in the range of -10 to 105°C, and preferably in the range of -5 to 95°C. The contact time of the cooling roll with the sheet is preferably 1 to 30 seconds, and more preferably 2 to 15 seconds.

### (4) Removal of Membrane-Forming Solvent

A washing solvent is used to remove (wash away) the membrane-forming solvent. Since the polyolefin resin phase is separated from the membrane-forming solvent phase in the gel-like sheet, removing the membrane-forming solvent provides a porous membrane. The removal (washing away) of the membrane-forming solvent can be conducted using a known washing solvent. Examples of washing solvents include volatile solvents, for example, saturated hydrocarbons such as pentane, hexane, and heptane; chlorinated hydrocarbons such as methylene chloride and carbon tetrachloride; ethers such as diethyl ether and dioxane; ketones such as methyl ethyl ketone; linear fluorocarbons such as trifluoroethane, C₆F₁₄, and C₇F₁₆; cyclic hydrofluorocarbons such as C₅H₃F₇; hydrofluoroethers such as C₄F₉OCH₃ and C₄F₉OC₂H₅; and perfluoroethers such as C₄F₉OCF₃ and C₄F₉OC₂F₅. These washing solvents have a low surface tension (e.g., 24 mN/m or less at 25°C). Using a washing solvent having a low surface tension prevents a micropore-forming network structure from shrinking due to a surface tension at gas-liquid interfaces during drying after washing, thereby providing a microporous membrane having high porosity and permeability.

Membrane washing can be conducted by immersion in a washing solvent, showering a washing solvent, or the combination thereof. The washing solvent is preferably used in an amount of 300 to 30,000 parts by mass based on 100 parts by mass of the membrane before washing. Washing with a washing solvent is preferably conducted until the amount of the remaining membrane-forming solvent is reduced to less than 1% by mass of the amount initially added.

### (5) Drying of Membrane

The microporous polyolefin membrane obtained by removing the membrane-forming solvent is dried, for example, by heat-drying or air-drying. The drying temperature is preferably equal to or lower than the crystal dispersion temperature Tcd of the polyolefin resin, and particularly preferably 5°C or more lower than the Tcd.

In cases where the polyolefin resin is (a) the ultra-high molecular weight polyethylene, (b) the polyethylene other than ultra-high molecular weight polyethylene, or (c) the polyethylene composition described above, the crystal dispersion temperature Tcd of the polyolefin resin is a crystal dispersion temperature of them, and in cases where the polyolefin resin is a composition containing a polyolefin other than polyethylene or a heat resistant resin, the crystal dispersion temperature Tcd of the polyolefin resin is a crystal dispersion temperature of the ultra-high molecular weight polyethylene, the polyethylene other than ultra-high molecular weight polyethylene, or the polyethylene composition contained in the composition (the same shall apply hereinafter). The crystal dispersion temperature herein refers to a value determined by measuring temperature characteristics of dynamic viscoelasticity according to ASTM D 4065. The ultra-high molecular weight polyethylene, the polyethylene other than ultra-high molecular weight polyethylene, and the polyethylene composition described above has a crystal dispersion temperature of about 90 to 100°C.

The drying is preferably conducted until the amount of the remaining washing solvent is reduced to 5% by mass or less, more preferably 3% by mass or less, based on 100% by mass of the microporous membrane (dry weight). If the drying is insufficient, the porosity of the microporous membrane is reduced when heat treatment is conducted subsequently, resulting in poor permeability, which is not preferred.

### (6) Stretching

The gel-like sheet before washing is preferably stretched in at least one direction. After heating, the gel-like sheet is preferably stretched to a predetermined magnification by a tenter method or a roll method. The gel-like sheet can be uniformly stretched because it contains a membrane-forming solvent. The stretching improves mechanical strength and expands pores, which is particularly preferred when the microporous membrane is used as a battery separator. Although the stretching may be monoaxial stretching or biaxial stretching, the biaxial stretching is preferred. The biaxial stretching may be simultaneous biaxial stretching, sequential stretching, or multi-stage stretching (e.g., a combination of simultaneous biaxial stretching and sequential stretching), though the simultaneous biaxial stretching is particularly preferred.

The stretching magnification, in the case of monoaxial stretching, is preferably 2-fold or more, and more preferably 3- to 30-fold. In the case of biaxial stretching, it is preferably at least 3-fold in both directions and 9-fold or more in area magnification.

An area magnification of less than 9-fold results in insufficient stretching, and a high-modulus and high-strength microporous membrane cannot be obtained. An area magnification of more than 400-fold puts restrictions on stretching apparatuses, stretching operation, and the like. The upper limit of the area magnification is preferably 50-fold.

The stretching temperature is preferably not higher than the melting point Tm of the polyolefin resin + 10°C, and more preferably in the range of not lower than the crystal dispersion temperature Tcd described above and lower than the melting point Tm described above. When the stretching temperature is higher than Tm + 10°C, the polyethylene resin is molten, and molecular chains cannot be oriented by stretching. When it is lower than Tcd, the polyethylene resin softens so poorly that the membrane is likely to be broken by stretching, and, therefore, high-magnification stretching cannot be conducted. As described above, the polyethylene resin has a crystal dispersion temperature of about 90 to 100°C. Accordingly, the stretching temperature is usually in the range of 90 to 140°C, and preferably in the range of 100 to 130°C.

The stretching speed is preferably 1 to 80%/sec. In the case of monoaxial stretching, the stretching speed is 1 to 80%/sec in the longitudinal direction (MD) or the transverse direction (TD). In the case of biaxial stretching, it is 1 to 80%/sec in both MD and TD. The stretching speed (%/sec) of the gel-like sheet is expressed as a percentage relative to 100% of the length before stretching. When the stretching speed is less than 1 %/sec, stable stretching cannot be conducted. When the stretching speed is more than 80%/sec, heat shrinkage resistance decreases. The stretching speed is more preferably 2 to 70%/sec. In the case of biaxial stretching, the stretching speeds in MD and TD may be the same or different as long as they are 1 to 80%/sec, though they are preferably the same.

The stretching described above causes cleavage between polyethylene crystal lamellas, and the polyethylene phase (the ultra-high molecular weight polyethylene, the polyethylene other than ultra-high molecular weight polyethylene, or the polyethylene composition) becomes finer, forming large numbers of fibrils. The resulting fibrils form a three-dimensional network structure (three-dimensionally and irregularly connected network structure).

Depending on the desired physical properties, stretching can be conducted with a temperature distribution in the membrane thickness direction, whereby a microporous membrane with more excellent mechanical strength is provided. The method is described specifically in Japanese Patent No. 3347854.

### (7) Hot Roll Treatment

At least one surface of the gel-like sheet can be brought into contact with a heat roll, whereby the compression resistance of the microporous membrane is improved. The specific method is described, for example, in JP 2006-248582 A.

### (8) Hot Solvent Treatment

The gel-like sheet can be brought into contact with hot solvent, whereby a microporous membrane with more excellent mechanical strength and permeability is provided. The method is described specifically in WO2000/20493.

### (9) Heat-Setting

The stretched gel-like sheet can be heat-set. The specific method is described, for example, in JP 2002-256099 A.

### (10) Stretching of Microporous Membrane

The dried microporous polyolefin membrane can be stretched in at least one direction as long as the effects of the present invention are not impaired. This stretching can be conducted while heating the membrane by a tenter method or the like similarly to the above.

The temperature of stretching the microporous membrane is preferably not higher than the melting point Tm of the polyolefin resin, and more preferably in the range of the Tcd to the Tm described above. Specifically, it is in the range of 90 to 135°C, and preferably in the range of 95 to 130°C. In the case of biaxial stretching, the magnification is preferably 1.1- to 2.5-fold in at least one direction, and more preferably 1.1- to 2.0-fold. When the magnification is more than 2.5-fold, the shutdown temperature may be adversely affected.

### (11) Heat Treatment

The dried membrane is preferably heat-set and/or annealed by a known method. They may be properly selected depending on the physical properties the microporous polyolefin membrane requires. The heat treatment stabilizes crystals and makes lamellas uniform. It is particularly preferable to anneal the microporous membrane after stretching once.

### (12) Cross-linking of Membrane

The dried microporous polyolefin membrane can be cross-linked by irradiation with ionizing radiation such as alpha-rays, beta-rays, gamma-rays, or electron beams. In the case of irradiation with electron beams, the electron dose of 0.1 to 100 Mrad is preferred, and the accelerating voltage of 100 to 300 kV is preferred. The cross-linking treatment increases the meltdown temperature of the microporous membrane.

### (13) Hydrophilizing

The dried microporous polyolefin membrane can be hydrophilized by monomer-grafting treatment, surfactant treatment, corona-discharging treatment, plasma treatment, or the like using a known method.

### (14) Surface Coating

Coating the surface of the dried microporous polyolefin membrane with a porous fluororesin such as polyvinylidene fluoride or polytetrafluoroethylene, porous polyimide, or porous polyphenylene sulfide improves the meltdown properties when used as a battery separator. A coating layer comprising polypropylene may be formed on at least one surface of the dried microporous polyolefin membrane. Examples of the polypropylene for coating include the polypropylene disclosed in WO2005/054350.

### [3] Modifying Porous Layer

The modifying porous layer used in the present invention will now be described.

Although the modifying porous layer in the present invention may be any modifying porous layer as long as it is a layer containing a fluorine resin that provides or improves at least one function such as heat resistance, adhesion to electrode material, or electrolyte solution permeability, the modifying porous layer contains inorganic particles or cross-linked polymer particles in addition to the functional resin.

For example, from the standpoint of improving heat resistance, the functional resin used is preferably a heat resistant resin having a glass transition temperature or melting point of preferably 150°C or higher, more preferably 180°C or higher, and most preferably 210°C or higher. There is no need to set the upper limit on the glass transition temperature or melting point. When the glass transition temperature is higher than the decomposition temperature, it is preferable if the decomposition temperature is within the range described above. When the glass transition temperature is lower than 150°C, a sufficient thermal film-breaking temperature cannot be achieved, and high safety may not be ensured.

Specifically, in view of heat resistance and adhesion to electrode, it is preferable to use at least one selected from the group consisting of vinylidene fluoride homopolymer, vinylidene fluoride/fluorinated olefin copolymer, vinyl fluoride homopolymer, and vinyl fluoride/fluorinated olefin copolymer. Polyvinylidene fluoride resin is particularly preferred. These polymers have adhesion to electrode, high affinity for nonaqueous electrolyte solution, proper heat resistance, and high chemical and physical stability to nonaqueous electrolyte solution, and therefore can maintain an affinity for electrolyte solution sufficiently even when used at high temperature.

The polyvinylidene fluoride resin may be a commercially available resin. Examples thereof include KF Polymer #1100, KF Polymer #1120, KF Polymer W#1700, KF Polymer #8500, and the like (trade name) available from Kureha Chemical Industry Co., Ltd.; Hylar (registered trademark) 301F PVDF, Hylar (registered trademark) 460, Hylar (registered trademark) 5000 PVDF, and the like (trade name) available from SOLVAY SPECIALTY POLYMERS JAPAN K.K.; and KYNAR (registered trademark) 761, KYNAR FLEX (registered trademark) 2800, KYNAR FLEX (registered trademark) 2850, KYNAR FLEX (registered trademark) 2851, and the like available from ARKEMA.

To form pores, improve heat resistance, and reduce curl, it is necessary to add inorganic particles or cross-linked polymer particles to the modifying porous layer of the present invention. Furthermore, adding inorganic particles or cross-linked polymer particles produces the effect of preventing internal short circuit due to the growth of dendrites on an electrode inside a battery (dendrite-preventing effect), the effect of providing slip characteristics, and the like. The upper limit of the amount of these particles is preferably 98% by weight, and more preferably 95% by weight, based on the total modifying porous layer. The lower limit is preferably 30% by weight, and more preferably 40% by weight. An amount less than 30% by weight results in a poor curl-reducing effect and dendrite-preventing effect. An amount more than 98% by weight decreases the percentage of the functional resin relative to the total volume of the modifying porous layer, which can cause poor adhesion to electrodes.

Examples of inorganic particles include calcium carbonate, calcium phosphate, amorphous silica, crystalline glass filler, kaolin, talc, titanium dioxide, alumina, silica-alumina composite oxide particles, barium sulfate, calcium fluoride, lithium fluoride, zeolite, molybdenum sulfide, and mica.

Examples of cross-linked polymer particles include cross-linked polystyrene particles, cross-linked acrylic resin particles, and cross-linked methyl methacrylate particles.

The average particle size of such particles is preferably 1.5 times to 50 times the average pore size of the microporous polyolefin membrane. It is more preferably 2.0 times to 20 times.

When the average particle size of the particles is less than 1.5 times the average pore size of the microporous polyolefin membrane, depending on the breadth of particle size distribution, the heat resistant resin and the particles coexist and block the pores of the microporous polyolefin membrane, which can result in significant increase in air resistance. When the average particle size of the particles exceeds 50 times the average pore size of the polyethylene porous membrane A, the particles fall off during a battery assembly process, which can cause serious defects in the battery.

The shape of the particles may be spherical, substantially spherical, plate-like, or needle-like, but is not limited thereto.

The modifying porous layer preferably has a thickness of 1 to 5 µm, more preferably 1 to 4 µm, and most preferably 1 to 3 µm. When the thickness is thinner than 1 µm, the adhesion to electrodes can be poor, and, in addition, membrane strength and insulation properties may not be ensured when the microporous polyolefin membrane melts and shrinks at or higher than its melting point. When it is thicker than 5 µm, sufficient pore-blocking function may not be provided because of the small percentage of the microporous polyolefin membrane, failing to prevent an abnormal reaction. Further, the size when taken up will be large, which is not suitable for the increase in battery capacity which is expected to progress in the future. Furthermore, curling tends to increase, leading to low productivity in the battery assembly process.

The modifying porous layer preferably has a porosity of 30 to 90%, and more preferably 40 to 70%. When the porosity is less than 30%, electrical resistance of the membrane increases, causing difficulty in application of high current. When the porosity is more than 90%, the membrane strength tends to decrease.

The upper limit of the total thickness of a battery separator obtained by laminating the modifying porous layer is preferably 25 µm, and more preferably 20 µm. The lower limit is preferably not less than 5 µm, and more preferably not less than 7 µm. When it is thinner than 5 µm, it can be difficult to ensure sufficient mechanical strength and insulation properties, and when it is thicker than 25 µm, the area of electrodes that can be loaded into a container is reduced, whereby it can be difficult to avoid the decrease in capacity.

### [4] Method of Laminating Modifying Porous Layer

The method of laminating the modifying porous layer of the battery separator of the present invention will now be described.

In the present invention, a preferred method of laminating the modifying porous layer comprises the steps (i) and (ii).
Step (i): A coating solution containing a functional resin (which hereinafter may be referred to as varnish) is applied onto a microporous polyolefin membrane, and then the microporous polyolefin membrane is passed through a zone with a predetermined humidity over 3 seconds to 10 seconds to form a functional resin membrane on the microporous polyolefin membrane.
Step (ii): The composite membrane obtained in the step (i) in which the functional resin membrane is laminated is immersed in a coagulation bath to convert the functional resin membrane into a modifying porous layer, and the modifying porous layer is washed and dried to obtain a battery separator.

Description will now be given in more detail.

The modifying porous layer is obtained as follows: a functional resin solution obtained by dissolving a functional resin in a solvent that is able to dissolve the functional resin and miscible with water, or a varnish containing the functional resin solution and the particles described above as principal components is laminated on a given microporous polyolefin membrane using a coating method; the microporous polyolefin membrane is placed in a certain humidity environment before or after the lamination to cause phase separation between the functional resin and the solvent miscible with water; and further the functional resin is coagulated by pouring into a water bath (coagulation bath). The varnish may be applied directly to the microporous polyolefin membrane, or a method (transcription method) may be used in which the varnish is once applied to a substrate film (e.g., polypropylene film or polyester film); the coated film is placed in a certain humidity environment (which hereinafter may be referred to as controlled humidity zone) to cause phase separation between the functional resin component and the solvent component; and then the functional resin is transcribed onto the microporous polyolefin membrane to achieve lamination. However, the features of the microporous polyolefin membrane can be exhibited more strongly by direct application.

The controlled humidity zone as used herein is a zone where the lower limit of absolute humidity is controlled at 0.5 g/m³, preferably 3 g/m³, and more preferably 5 g/m³, and the upper limit at 25 g/m³, preferably 17 g/m³, and more preferably 15 g/m³. When the absolute humidity is less than 0.5 g/m³, gelation (defluidization) does not proceed sufficiently, and, consequently, infiltration of the resin component constituting the modifying porous layer into the microporous polyolefin membrane proceeds too far, which can result in decreased shutdown properties. When the absolute humidity is more than 25 g/m³, coagulation of the resin component constituting the modifying porous layer proceeds too far, and infiltration of the functional resin component into the microporous polyolefin membrane is too little; consequently, sufficient adhesion to the microporous polyolefin membrane may not be obtained.

Examples of the method of applying the varnish include the reverse roll coating method, gravure coating method, kiss coating method, roll brushing method, spray coating method, air knife coating method, meyer bar coating method, pipe doctor method, blade coating method, die coating method, and the like, and these methods can be used alone or in combination.

In the coagulation bath, the resin component and the particles coagulate into three-dimensional network. The immersion time in the coagulation bath is preferably not less than 3 seconds. If it is less than 3 seconds, coagulation of the resin component may not proceed sufficiently. Although the upper limit is not limited, 10 seconds is enough.

Further, the unwashed modifying porous layer described above is immersed in an aqueous solution containing a good solvent for the functional resin in an amount of 1 to 20% by weight, more preferably 5 to 15% by weight, and the washing step using pure water and the drying step using hot air at 100°C or lower are conducted, whereby a final battery separator can be obtained

For the washing of the modifying porous layer, common methods such as warming, ultrasonic irradiation, and bubbling can be used. Further, for keeping the concentration in each bath constant to increase washing efficiency, the method of removing the solution in the porous membrane between the baths is effective. Specific examples thereof include extruding the solution in the porous layer with air or inert gas, squeezing out the solution in the membrane physically with a guide roll, and the like.

### [5] Physical Properties of Microporous Polyolefin Membrane and Battery Separator

The microporous polyolefin membrane used in the present invention and the battery separator of the present invention have the following physical properties.

### (1) Shutdown Temperature

The microporous polyolefin membrane used in the present invention has a shutdown temperature of 135°C or lower. Shutdown temperatures higher than 135°C can result in low overheat shutdown response when a modifying porous layer is laminated on the microporous polyolefin membrane.

### (2) Rate of Air Resistance Change (Indicator of Shutdown Speed)

The microporous polyolefin membrane used in the present invention has a rate of air resistance change after the start of shutdown of 1 × 10⁴ sec/100 cc/°C or more. A rate of air resistance change less than 1 × 10⁴ sec/100 cc/°C leads to an increased shutdown temperature when a modifying porous layer is laminated on the microporous polyolefin membrane. The rate of air resistance change is more preferably 1.2 × 10⁴ sec/100 cc/°C or more.

### (3) Shrinkage Rate at 130°C

The microporous polyolefin membrane used in the present invention has a transverse shrinkage rate at 130°C (measured by thermomechanical analysis under a load of 2 gf and at a temperature rise rate of 5°C/min) of 20% or less. Shrinkage rates at 130°C of more than 20% significantly decrease the heat resistance of a battery separator when a modifying porous layer is laminated on the microporous polyolefin membrane. The heat shrinkage rate is preferably 17% or less.

The microporous polyolefin membrane according to a preferred embodiment of the present invention also has the following physical properties.

### (4) Thickness of Microporous Polyolefin Membrane

The microporous polyolefin membrane used in the present invention preferably has a thickness of 20 µm or less. The upper limit is more preferably 16 µm, and most preferably 10 µm. The lower limit is 5 µm, and preferably 6 µm. When it is thinner than 5 µm, membrane strength and pore-blocking function of practical use may not be provided, and when it is more than 20 µm, the area per unit volume of a battery case is significantly restricted, which is not suitable for the increase in the capacity of a battery which is expected to progress in the future.

### (5) Air Resistance

For the air resistance of the microporous polyolefin membrane used in the present invention, the upper limit is preferably 300 sec/100 cc Air, more preferably 200 sec/100 cc Air, and most preferably 150 sec/100 cc Air, and the lower limit is 50 sec/100 cc Air, preferably 70 sec/100 cc Air, and more preferably 100 sec/100 cc Air.

### (6) Porosity

For the porosity of the microporous polyolefin membrane used in the present invention, the upper limit is preferably 70%, more preferably 60%, and most preferably 55%. The lower limit is preferably 30%, more preferably 35%, and still more preferably 40%. In both cases where the air resistance is higher than 300 sec/100 cc Air and where the porosity is lower than 30%, it is not sufficient for sufficient charge and discharge properties, particularly, ion permeability (charge and discharge operating voltage) of a battery and for the lifetime of a battery (closely related to the amount of electrolytic solution retained), and when these limits are exceeded, it is likely that functions of a battery cannot be fully exerted. Further, in both cases where the air resistance is lower than 50 sec/100 cc Air and where the porosity is higher than 70%, sufficient mechanical strength and insulation properties are not provided, and it is highly likely that a short circuit occurs during charge and discharge.

### (7) Pin Puncture Strength

The microporous polyolefin membrane used in the present invention preferably has a pin puncture strength of 4,000 mN/20 µm or more. Pin puncture strengths less than 4,000 mN/20 µm can cause a short circuit between electrodes when the microporous polyolefin membrane is introduced into a battery as a separator. The pin puncture strength is more preferably 4,500 mN/20 µm or more.

### (8) Tensile Rupture Strength

The microporous polyolefin membrane used in the present invention preferably has a tensile rupture strength of 80,000 kPa or more in both MD and TD. When it is 80,000 kPa or more, the membrane will not rupture when used as a battery separator. The tensile rupture strength is more preferably 100,000 kPa or more.

### (9) Tensile Rupture Elongation

The microporous polyolefin membrane used in the present invention preferably has a tensile rupture elongation of 100% or more in both MD and TD. When the tensile rupture elongation is 100% or more, the membrane will not rupture when used as a battery separator.

### (10) Shutdown Start Temperature

The microporous polyolefin membrane used in the present invention preferably has a shutdown start temperature of 130°C or lower. When the shutdown start temperature is higher than 130°C, the microporous polyolefin membrane will have a low overheat shutdown response when used as a lithium battery separator.

### (11) Meltdown Temperature

The microporous polyolefin membrane used in the present invention preferably has a meltdown temperature of 150°C or higher. When used as a battery separator, it is preferably 200°C or higher. Meltdown temperatures less than 200°C lead to poor rupture resistance during the temperature rising after shutdown.

Thus, the microporous polyolefin membrane according to a preferred embodiment of the present invention has an excellent balance of shutdown properties, heat shrinkage resistance in a temperature range from a shutdown start temperature to a shutdown temperature, and meltdown properties, and further has excellent permeability and mechanical properties.

The battery separator of the present invention is desirably stored dry, but when it is difficult to store it absolutely dry, it is preferable to perform a vacuum drying treatment at 100°C or lower immediately before use.

### EXAMPLES

The present invention will now be described in detail by way of example, but the present invention is not limited to the examples. The measurements in the examples are values measured by the following method.

### (1) Average Membrane Thickness

The thicknesses of a microporous polyolefin membrane and a battery separator were measured each at 10 randomly selected points using a contact thickness meter, and their average values were employed as average membrane thicknesses (µm).

### (2) Air Resistance

Using an Oken-type air resistance meter (EGO-1T manufactured by ASAHI SEIKO CO., LTD.), a sample was fixed such that wrinkling did not occur, and the air resistance was measured according to JIS P 8117. The sample was 10-cm square, and measuring points were the center and four corners, five points in total, of the sample; the average value was employed as an air resistance p (sec/100 cc Air).

When the length of a side of the sample is less than 10 cm, a value obtained by measuring air resistance at five points at intervals of 5 cm may be employed.

### (3) Pin Puncture Strength of Microporous Polyolefin Membrane

A maximum load was measured when a microporous membrane having a thickness T₁ (µm) was pricked with a needle of 1 mm in diameter with a spherical end surface (radius R of curvature: 0.5 mm) at a speed of 2 mm/sec. The measured maximum load Lₐ was converted to a maximum load L_{b} at a thickness of 20 µm by the equation: L_{b} = (Lₐ × 20)/T₁, which was employed as a pin puncture strength (mN/20 µm).

### (4) Tensile Rupture Strength and Tensile Rupture Elongation of Microporous Polyolefin Membrane

Measurements were made using a strip test piece 10 mm wide according to ASTM D882.

### (5) Shutdown Temperature T_{SD} of Microporous Polyolefin Membrane and Battery Separator

For a shutdown temperature T_{SD} (°C), the air resistance of a microporous polyethylene membrane was measured using an Oken-type air resistance meter (EGO-IT manufactured by ASAHI SEIKO CO., LTD.) while heating at a temperature rise rate of 5 C°/min, and a temperature at which the air resistance reached 1 × 10⁵ sec/100 cc which is the detection limit was determined, which temperature was employed as a shutdown temperature T (°C).

The difference between the shutdown temperature of a microporous polyolefin membrane and the shutdown temperature of a battery separator is 2.5°C or less, more preferably 2.0°C or less, and most preferably 1.0°C or less.

### (6) Shutdown Start Temperature Ts

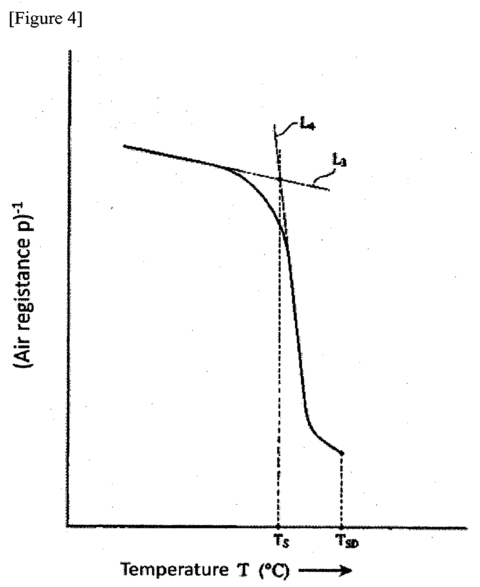

The data of the air resistance p (sec/100 cc Air) at a temperature T (°C), which was obtained in the above shutdown temperature measurement, was used to generate a curve (shown in FIG. 4) representing the relation of a reciprocal of the air resistance p to a temperature, and an intersection of an extension L₃ of the straight portion from the start of temperature rise (room temperature) to the start of shutdown and an extension L₄ of the straight portion from after the start of shutdown until reaching the shutdown temperature T_{SD} (°C) was employed as a shutdown start temperature Ts (°C).

### (7) Shutdown Speed (Rate of Air Resistance Change)

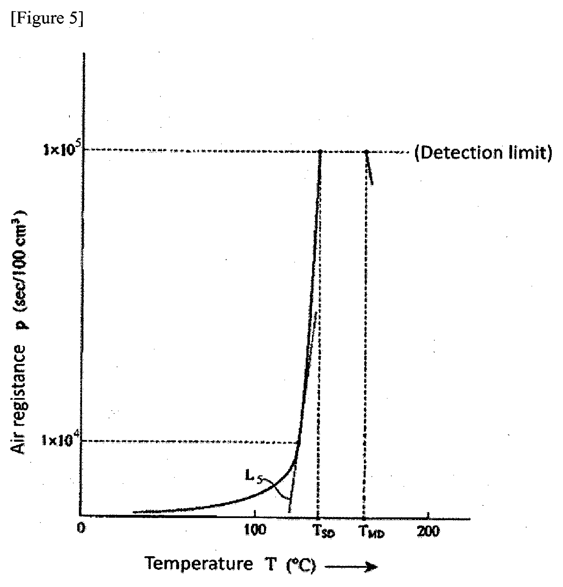

The data of the air resistance p at a temperature T, which was obtained in the above shutdown temperature measurement, was used to generate a temperature-air resistance curve (shown in FIG. 5), and a gradient of the curve (Δp/AT, inclination of a tangent L₅ shown in FIG. 5) at a temperature at which the air resistance reached 1 × 10⁴ sec/100 cc was determined and employed as a rate of air resistance change.

### (8) Shrinkage Rate at 130°C

Using a thermomechanical analyzer (TMA/SS6000 manufactured by Seiko Instruments, Inc.), a test piece of 10 mm (TD) × 3 mm (MD) was heated from room temperature at a speed of 5°C/min while drawing the test piece in the longitudinal direction under a load of 2 g, and a rate of dimensional change from the size at 23°C was measured at 130°C three times. The measurements were averaged to determine a shrinkage rate.

### (9) Meltdown Temperature T_{MD} of Microporous Polyolefin Membrane and Battery Separator

After the above shutdown temperature T_{SD} was reached, heating was further continued at a temperature rise rate of 5°C/min, and a temperature at which the air resistance became 1 × 10⁵ sec/100 cc again was determined and employed as a meltdown temperature T_{MD} (°C) (see FIG. 5).

### (10) Heat Resistance of Battery Separator

The heat resistance of a microporous polyolefin membrane and a battery separator was determined from the average value of the rate of change from the initial size in MD and TD after storage in an oven at 130°C for 60 minutes.

### (11) Adhesion to Electrode

An anode and a battery separator were each cut out to a size of 2 cm × 5 cm, and the active material surface of the anode and the modifying porous layer surface of the battery separator were laminated to each other. The lamination was pressed at a pressure of 2 MPa for 3 minutes while maintaining the temperature of the laminated surface at 50°C. Thereafter, the anode and the battery separator were peeled off, and the peeled surface was observed and evaluated according to the following criteria.

The anode electrode used was a layer coated electrode A100 (1.6 mAh/cm²) available from PIOTREK.
Good: Active material of anode attaches to modifying porous layer of battery separator in area of 50% or more
Poor: Active material of anode attaches to modifying porous layer of battery separator in area of not less than 10% and less than 50%

### Example 1

One hundred parts by mass a polyethylene (PE) composition composed of 30% by mass of ultra-high molecular weight polyethylene (UHMWPE) with a mass average molecular weight (Mw) of 2.5 × 10⁶ and 70% by mass of high density polyethylene (HDPE) with a Mw of 3.0 × 10⁵ was dry-blended with 0.375 parts by mass of tetrakis[methylene-3-(3,5-ditertiary butyl-4-hydroxyphenyl)-propionate]methane. The PE composition composed of UHMWPE and HDPE showed a ΔHm (≤ 125°C) of 14%, a T (50%) of 132.5°C, a melting point of 135°C, and a crystal dispersion temperature of 100°C.

The Mws of UHMWPE and HDPE were determined by gel permeation chromatography (GPC) under the following conditions (the same shall apply hereinafter).
- Measuring apparatus: GPC-150C available from Waters Corporation
- Column: Shodex UT806M available from SHOW A DENKO K.K.
- Column temperature: 135°C
- Solvent (mobile phase): o-dichlorbenzene
- Solvent flow rate: 1.0 mL/min
- Sample concentration: 0.1% by mass (dissolution conditions: 135°C/h)
- Injection amount: 500 µL
- Detector: Differential refractometer available from Waters Corporation
- Calibration curve: Generated from a calibration curve of a monodisperse polystyrene standard sample using a predetermined conversion constant.

Twenty-five parts by mass of the resulting mixture was charged into a strong-blending twin-screw extruder (feed rate Q of the polyethylene composition: 120 kg/h). Seventy-five parts by mass of liquid paraffin was fed to the twin-screw extruder via a side feeder, and melt-blended at a temperature of 210°C while keeping the screw rotation speed Ns at 400 rpm (Q/Ns: 0.3 kg/h/rpm) to prepare a polyethylene solution.

The polyethylene solution obtained was fed from the twin-screw extruder to a T-die, and extruded into a sheet shape. The extrudate was cooled by taking it up around a cooling roll controlled at 50°C to form a gel-like sheet. The gel-like sheet obtained was simultaneously biaxially stretched to 5-fold at a speed of 20%/sec in both MD and TD with a batch-type stretching machine at 114°C. The stretched gel-like sheet was fixed to a frame plate (size: 30 cm × 30 cm, aluminum) and immersed in a washing bath of methylene chloride controlled at 25°C, and washed while swaying at 100 rpm for 3 minutes to remove the liquid paraffin. The washed membrane was air-dried at room temperature, fixed to a tenter, and heat-set at 126°C for 10 minutes to produce a microporous polyethylene membrane having a thickness of 20 µm and an air resistance of 380 sec/100 cc Air.

### (Preparation of Varnish)

As a fluorine resin solution, a solution of polyvinylidene fluoride (trade name: KF Polymer #1120 available from Kureha Chemical Industry Co., Ltd.) (melting point: 175°C, solid content concentration: 12%) in N-methylpyrrolidone was used.

The fluorine resin solution, alumina particles with an average particle size of 0.5 µm, and N-methyl-2-pyrrolidone were mixed at a weight ratio of 26:34:40. The resulting mixture was placed into a polypropylene container together with zirconium oxide beads (available from TORAY INDUSTRIES, INC., trade name "Torayceram (registered trademark) beads", diameter: 0.5 mm) and dispersed for 6 hours using a paint shaker (manufactured by Toyo Seiki Seisaku-Sho, Ltd.). Thereafter, the dispersion was filtered through a filter with a filtration limit of 5 µm to prepare a varnish (a).

The varnish was applied to one surface of a microporous polyethylene membrane (a) by blade coating method. The resultant was passed through a controlled humidity zone at a temperature of 25°C and an absolute humidity of 12 g/m³ over 5 seconds, immersed in an aqueous solution containing 5% by weight of N-methyl-2-pyrrolidone for 10 seconds, washed with pure water, and then dried by passing it through a hot-air drying furnace at 70°C. A modifying porous layer was laminated thereon to obtain a battery separator with a final thickness of 22 µm.

### Example 2

In the production of a microporous polyethylene membrane in Example 1, while keeping the ratio of a feed rate of a polyethylene composition to a screw rotation speed Ns (Q/Ns) at 0.3 kg/h/rpm, the feed rate of a polyethylene composition and the screw rotation speed were adjusted to produce a microporous polyethylene membrane (b) having a thickness of 9 µm and an air resistance of 70 sec/100 cc Air.

Next, a modifying porous layer was laminated on one surface of the microporous polyethylene membrane (b) in the same manner as in Example 1 to obtain a battery separator with a final thickness of 11 µm.

### Example 3

A battery separator with a final thickness of 24 µm was obtained in the same manner as in Example 1 except that modifying porous layers of same thickness were laminated on both surfaces of the microporous polyethylene membrane (a) obtained in Example 1.

### Example 4

A battery separator was obtained in the same manner as in Example 1 except that a varnish (b) obtained by mixing a fluorine resin solution, alumina particles, and N-methyl-2-pyrrolidone at a ratio of 50:5:45 was used as a varnish.

### Example 5

A battery separator with a final thickness of 22 µm was obtained in the same manner as in Example 1 except that in producing a microporous polyethylene membrane, a polyethylene composition was used, comprising 20% by mass of UHMWPE and 80% by mass of HDPE and having a ΔHm (≤ 125°C) of 16% and a T (50%) of 132.9°C.

### Example 6

A battery separator with a final thickness of 22 µm was obtained in the same manner as in Example 1 except that in producing a microporous polyethylene membrane, a polyethylene composition was used, comprising 30% by mass of UHMWPE with a Mw of 2.0 × 10⁶ and 70% by mass of HDPE with a Mw of 2.8 × 10⁵ and having a ΔHm (≤ 125°C) of 11% and a T (50%) of 134.7°C.

### Example 7

In producing a microporous polyethylene membrane, liquid paraffin was removed and then drying was performed in the same manner as in Example 1. A battery separator with a final thickness of 22 µm was obtained in the same manner as in Example 1 except that the membrane obtained was re-stretched to 1.1-fold in TD at a temperature of 126°C, annealed at 126°C until the membrane shrunk to the size before re-stretching, and heat-set at the same temperature for 10 minutes.

### Example 8

A microporous polyethylene membrane was obtained in the same manner as in Example 1 except that while keeping the ratio of a feed rate of a polyethylene composition to a screw rotation speed Ns (Q/Ns) at 0.3 kg/h/rpm, the feed rate of a polyethylene composition and the screw rotation speed were adjusted, and the thickness was 12 µm. The air resistance was 170 sec/100 cc Air.

A battery separator with a final thickness of 16 µm was obtained in the same manner as in Example 1 except that a varnish (c) was used, obtained by mixing the same fluorine resin solution as in Example 1, cross-linked polymer particles (polymethyl methacrylate cross-linked particles (product name: Epostar (registered trademark) MA, type 1002, available from NIPPON SHOKUBAI CO., LTD., average particle size: 2.5 µm)), and N-methyl-2-pyrrolidone at a ratio of 40:10:50.

### Comparative Example 1

A modifying porous layer was not laminated, and the microporous polyethylene membrane obtained in Example 5 was used as a battery separator.

### Comparative Example 2

A battery separator with a final thickness of 22 µm was obtained in the same manner as in Example 1 except that in producing a microporous polyethylene membrane, a polyethylene composition was used, comprising 30% by mass of UHMWPE with a Mw of 2.2 × 10⁶ and 70% by mass of HDPE with a Mw of 3.0 × 10⁵ and having a ΔHm (≤ 125°C) of 9% and a T (50%) of 135.9°C.

### Comparative Example 3

A battery separator with a final thickness of 22 µm was obtained in the same manner as in Example 1 except that in producing a microporous polyethylene membrane, a polyethylene composition was used, comprising 30% by mass of UHMWPE with a Mw of 2.2 × 10⁶, 40% by mass of HDPE with a Mw of 3.0 × 10⁵, and 30% by mass of low-molecular-weight polyethylene with a Mw of 2.0 × 10³ and having a ΔHm (≤ 125°C) of 26% and a T (50%) of 133.6°C, and the heat-setting temperature was 118°C.

### Comparative Example 4

A battery separator with a final thickness of 22 µm was obtained in the same manner as in Example 1 except that in producing a microporous polyethylene membrane, a polyethylene composition was used, comprising 20% by mass of UHMWPE with a Mw of 2.5 × 10⁶ and 80% by mass of HDPE with a Mw of 3.0 × 10⁵ and having a ΔHm (≤ 125°C) of 28% and a T (50%) of 133.1°C; the stretching temperature was 108°C; and the heat-setting temperature was 118°C.

### Comparative Example 5

A battery separator with a final thickness of 22 µm was obtained in the same manner as in Example 1 except that a polyethylene composition was used, comprising 20% by mass of UHMWPE with a Mw of 2.5 × 10⁶ and 80% by mass of HDPE with a Mw of 3.0 × 10⁵ and having a ΔHm (≤ 125°C) of 24% and a T (50%) of 133.5°C; the stretching speed was 100%; and the heat-setting temperature was 120°C.

### Comparative Example 6

A battery separator with a final thickness of 22 µm was obtained in the same manner as in Example 1 except that in producing a microporous polyethylene membrane, a polyethylene composition was used, comprising 20% by mass of UHMWPE with a Mw of 2.5 × 10⁶ and 80% by mass of HDPE with a Mw of 3.0 × 10⁵ and having a ΔHm (≤ 125°C) of 21% and a T (50%) of 132.2°C; the ratio of the rate Q of feeding the polyethylene composition into the extruder to a screw rotation speed Ns was controlled to be 0.075 to prepare a polyethylene solution; and the heat-setting temperature was 120°C.

### Comparative Example 7

A polyethylene solution was prepared in the same manner as in Comparative Example 6 except that the ratio of the rate Q of feeding the polyethylene composition into the extruder to a screw rotation speed Ns was 0.6; and the polyethylene resin concentration was 30% by mass, but a homogeneous blending was not obtained.

Tables 1 to 4 show the physical properties of the battery separators obtained in Examples 1 to 8 and Comparative Examples 1 to 7. The meaning of (1) to (5) in Tables 1 to 4 is as follows:
Note: (1) Mw represents mass average molecular weight;
(2) The percentage of the integrated endothermic amount up to 125°C in the crystal melting heat quantity ΔHm measured by DSC, temperature rise rate: 10°C/min;
(3) The temperature at the time when endothermic amount (J/g) obtained by DSC reaches 50% of the crystal melting heat ΔHm, temperature rise rate: 10°C/min;
(4) Q represents the feed rate of a polyethylene composition to a twin-screw extruder, and Ns represents the screw rotation speed; and
(5) The difference between the shutdown temperature of a microporous polyolefin membrane and the shutdown temperature of a battery separator.

**[Table 1]**

| | | | Example 1 | Example 2 | Example 3 | Example 4 |
|---|---|---|---|---|---|---|
| | UHMWPE | Mw⁽¹⁾ | 2.5 × 10⁶ | 2.5 × 10⁶ | 2.5 × 10⁶ | 2.5 × 10⁶ |
| | | mass % | 30 | 30 | 30 | 30 |
| | HDPE | MW⁽¹⁾ | 3.0 × 10⁵ | 2.8 × 10⁵ | 3.0 × 10⁵ | 3.0 × 10⁵ |
| Resin composition | | mass % | 70 | 70 | 70 | 70 |
| | Low molecular weight PE | Mw⁽¹⁾ | - | - | - | - |
| | | mass % | - | - | - | - |
| | ΔHm (≦ 125°C)⁽²⁾ | % | 14 | 11 | 14 | 14 |
| | T (50%) ⁽³⁾ | °C | 132.5 | 134.7 | 132.5 | 132.5 |
| | Concentration of PE solution | mass % | 25 | 28 | 25 | 25 |
| | Blending condition Q⁽⁴⁾/Ns⁽⁴⁾ | kg/h/rpm | 0.3 | 0.3 | 0.3 | 0.3 |
| | Stretching temperature | °C | 114 | 116 | 114 | 114 |
| | Stretching magnification (MD × TD) | | 5 × 5 | 5 × 5 | 5 × 5 | 5 × 5 |
| Membrane producing conditions | Deformation speed | %/sec | 20 | 20 | 20 | 20 |
| | Re-stretching temperature | °C | - | 127 | - | - |
| | Re-stretching direction | | - | TD | - | - |
| | Re-stretching magnification | | - | 1.4 | - | - |
| | Annealing treatment temperature | °C | - | - | - | - |
| | Annealing direction | | - | - | - | - |
| | Annealing shrinkage rate | | - | - | - | - |
| | Heat setting treatment temperature | °C | 126 | 127 | 126 | 126 |
| | Heat setting teatment time | min | 10 | 10 | 10 | 10 |
| | Average membrane thickness | µm | 20 | 9 | 20 | 20 |
| | Air resistance | sec/100ccAir | 380 | 70 | 380 | 380 |
| | Pin puncture strength | mN/20µm | 4949 | 2255 | 4949 | 4949 |
| | Tensile rupture strength (MD) | kPa | 132300 | 118660 | 132300 | 132300 |
| Properties of microporous polyolefin membrane | Tensile rupture strength (TD) | kPa | 115640 | 147100 | 115640 | 115640 |
| | Tensile rupture elongation (MD) | % | 200 | 130 | 200 | 200 |
| | Tensile rupture elongation (TD) | % | 280 | 105 | 280 | 280 |
| | Shutdown start temperature | °C | 124.5 | 124.5 | 124.5 | 124.5 |
| | Shutdown speed | sec/100cc/°C | 14100 | 14100 | 14100 | 14100 |
| | Shutdown temperature | °C | 133.7 | 134.7 | 133.7 | 133.7 |
| | Shrinkage rate (TD) | % | 14 | 5 | 14 | 14 |
| | Meltdown temperature | °C | 162.1 | 161.9 | 162.1 | 162.1 |
| | Varnish | | a | a | a | b |
| Coating process | Coating surface(s) | | one surface | one surface | both surfaces | one surface |
| | Coating Thickness | µm | 2 | 2 | 2+2 | 2 |
| | Average membrane thickness | µm | 22 | 11 | 24 | 22 |
| | Air resistance | sec/100ccAir | 437 | 138 | 459 | 449 |
| Properties of battery separator | Shutdown temperature | °C | 134.8 | 136.5 | 136.0 | 136.1 |
| | Shutdown temperature difference ⁽⁵⁾ | °C | 1.1 | 1.8 | 2.3 | 2.4 |
| | Meltdown temperature | °C | >200 | > 200 | > 200 | > 200 |
| | Heat restance (Shrinkage rate) | % | 1.9 | 1.4 | 0.9 | 1.1 |
| | Adhesion to electrode | | good | good | good | good |

**[Table 2]**

| | | | Example 5 | Example 6 | Example 7 | Example 8 |
|---|---|---|---|---|---|---|
| | UHMWPE | Mw ⁽¹⁾ | 2.5 × 10⁶ | 2.0 × 10⁶ | 2.5 × 10⁶ | 2.5 × 10⁶ |
| | | mass % | 30 | 30 | 30 | 20 |
| | HDPE | Mw ⁽¹⁾ | 3.0 × 10⁵ | 2.8 × 10⁵ | 3.0 × 10⁵ | 3.0 × 10⁵ |
| Resin composition | | mass % | 80 | 70 | 70 | 80 |
| | Low molecular weight PE | Mw ⁽¹⁾ | - | - | - | - |
| | | mass % | - | - | - | - |
| | ΔHm ( ≦ 125°C)⁽²⁾ | % | 16 | 11 | 14 | 16 |
| | T (50%) ⁽³⁾ | °C | 132.9 | 134.7 | 132.5 | 132.9 |
| | Concentration of PE solution | mass % | 25 | 25 | 25 | 28 |
| | Blending condition Q⁽⁴⁾/Ns⁽⁴⁾ | kg/h/rpm | 0.3 | 0.3 | 0.3 | 0.3 |
| | Stretching temperature | °C | 114 | 114 | 114 | 118 |
| | Stretching magnification (MD × TD) | | 5 × 5 | 5 × 5 | 5 × 5 | 5 × 5 |
| Membrane producing conditions | Deformation speed | %/sec | 20 | 20 | 20 | 20 |
| | Re-stretching temperature | °C | - | - | 126 | - |
| | Re-stretching direction | | - | - | TD | - |
| | Re-stretching magnification | | - | - | 1.1 | - |
| | Annealing treatment temperature | °C | - | - | 126 | - |
| | Annealing direction | | - | - | TD | - |
| | Annealing shrinkage rate | | - | - | 0.91 | - |
| | Heat setting treatment temperature | °C | 126 | 126 | 126 | 119 |
| | Heat setting treatment time | min | 10 | 10 | 10 | 10 |
| | Average membrane thickness | µm | 20 | 20 | 20 | 12 |
| | Air resistance | sec/100ccAir | 365 | 378 | 365 | 170 |
| | Pin puncture strength | mN/20µm | 4655 | 4988 | 4655 | 2255 |
| | Tensile rupture strength (MD) | kPa | 123480 | 131320 | 123480 | 111796 |
| Properties of microporous polyolefin membrane | Tensile rupture strength (TD) | kPa | 107800 | 117600 | 107800 | 78453 |
| | Tensile rupture elongation (MD) | % | 220 | 200 | 220 | 170 |
| | Tensile rupture elongation (TD) | % | 300 | 270 | 300 | 200 |
| | Shutdown start temperature | °C | 124.1 | 125.3 | 124.1 | 124.5 |
| | Shutdown speed | sec/100cc/°C | 14800 | 19900 | 14800 | 14100 |
| | Shutdown temperature | °C | 133.6 | 134.8 | 133.6 | 133.7 |
| | Shrinkage rate (TD) | % | 12 | 15 | 12 | 11 |
| | Meltdown temperature | °C | 160.5 | 159.4 | 160.5 | 162.1 |
| | Varnish | | a | a | a | c |
| Coating process | Coating surface(s) | | one surface | one surface | one surface | both surfaces |
| | Coating thickness | µm | 2 | 2 | 2 | 2+2 |
| | Average membrane thickness | µm | 22 | 22 | 22 | 16 |
| | Air resistance | sec/100ccAir | 420 | 438 | 420 | 2 |
| Properties of battery separator | Shutdown temperature | °C | 134.2 | 136.0 | 134.8 | 135.3 |
| | Shutdown temperature difference ⁽⁵⁾ | °C | 0.6 | 1.2 | 1.2 | 1.6 |
| | Meltdown temperature | °C | > 200 | > 200 | > 200 | > 200 |
| | Heat restance (Shrinkage rate) | % | 1.9 | 2.4 | 1.9 | 1.0 |
| | Adhesion to electrode | | good | good | good | good |

**[Table 3]**

| | | | Comparative Example 1 | Comparative Example 2 | Comparative Example 3 | Comparative Example 4 |
|---|---|---|---|---|---|---|
| | UHMWPE | MW⁽¹⁾ | 2.5 × 10⁶ | 2.2 × 10⁶ | 2.2 × 10⁶ | 2.5 × 10⁶ |
| | | mass % | 30 | 30 | 30 | 20 |
| | HDPE | Mw ⁽¹⁾ | 3.0 × 10⁵ | 3.0 × 10⁵ | 3.0 × 10⁵ | 3.0 × 10⁵ |
| Resin composition | | mass % | 80 | 70 | 40 | 80 |
| | Low molecular weight PE | MW⁽¹⁾ | - | - | 2.0 × 10³ | - |
| | | mass % | - | - | 30 | - |
| | ΔHm (≦ 125°C)⁽²⁾ | % | 16 | 9 | 26 | 28 |
| | T (50%) ⁽³⁾ | °C | 132.9 | 135.9 | 133.6 | 133.1 |
| | Concentration of PE solution | mass % | 25 | 25 | 25 | 25 |
| | Blending condition Q⁽⁴⁾/Ns⁽⁴⁾ | kg/h/rpm | 0.3 | 0.3 | 0.3 | 0.3 |
| | Stretching temperature | °C | 114 | 114 | 114 | 108 |
| | Sketching magnification (MD × TD) | | 5 × 5 | 5 × 5 | 5 × 5 | 5 × 5 |
| Membrane producing conditions | Deformation speed | %/spec | 20 | 20 | 20 | 20 |
| | Re-stretching temperature | °C | - | - | - | - |
| | Re-stretching direction | | - | - | - | - |
| | Re-stretching magnification | | - | - | - | - |
| | Annealing treatment temperature | °C | - | - | - | - |
| | Annealing direction | | - | - | - | - |
| | Annealing shrinkage rate | | - | - | - | - |
| | Heat setting treatment temperature | °C | 126 | 126 | 118 | 118 |
| | Heat setting treatment time | min | 10 | 10 | 10 | 10 |
| | Average membrane thickness | µm | 20 | 20 | 20 | 20 |
| | Air resistance | sec/100ccAir | 365 | 420 | 510 | 511 |
| | Pin puncture strength | mN/20µm | 4655 | 4704 | 4194 | 5204 |
| | Tensile rupture strength (MD) | kPa | 123480 | 127400 | 112700 | 139160 |
| Properties of microporous polyolefin membrane | Tensile rupture strength (TD) | kPa | 107800 | 113680 | 95060 | 117600 |
| | Tensile rupture elongation (MD) | % | 220 | 180 | 180 | 140 |
| | Tensile rupture elongation (TD) | % | 300 | 220 | 260 | 200 |
| | Shutdown start temperature | °C | 124.1 | 127.0 | 122.9 | 124.5 |
| | Shutdown speed | sec/100cc/°C | 14800 | 8000 | 7900 | 13400 |
| | Shutdown temperature | °C | 133.6 | 136.4 | 134.0 | 133.3 |
| | Shrinkage rate (TD) | % | 12 | 19 | 29 | 36 |
| | Meltdown temperature | °C | 160.5 | 157.3 | 148.2 | 157.9 |
| | Varnish | | - | a | a | a |
| Coating process | Coating surface(s) | | - | one surface | one surface | one surface |
| | Coating thickness | µm | - | 2 | 2 | 2 |
| | Average membrane thickness | µm | 20 | 22 | 22 | 22 |
| | Air resistance | sec/100ccAir | 365 | 491 | 566 | 567 |
| Properties of battery separator | Shutdown temperature | °C | 124.1 | 141.3 | 140.3 | 135.9 |
| | Shutdown temperature difference ⁽⁵⁾ | °C | 0 | 4.9 | 6.3 | 2.6 |
| | Meltdown temperature | °C | 160.5 | > 200 | > 200 | > 200 |
| | Heat restance (Shrinkage rate) | % | 20 | 4.0 | 5.5 | 6.7 |
| | Adhesion to electrode | | poor | good | good | good |

**[Table 4]**

| | | | Comparative Example 5 | Comparative Example 6 | Comparative Example 7 |
|---|---|---|---|---|---|
| | UHMWPE | MW⁽¹⁾ | 2.5 × 10⁶ | 2.5 × 10⁶ | 2.5 × 10⁶ |
| | | mass % | 20 | 20 | 20 |
| | HDPE | Mw ⁽¹⁾ | 3.0 × 10⁵ | 3.0 × 10⁵ | 3.0 × 10⁵ |
| Resin composition | | mass % | 80 | 80 | 80 |
| | Low molecular weight PE | Mw⁽¹⁾ | - | - | - |
| | | mass % | - | - | - |
| | ΔHm(≦125°C)⁽²⁾ | % | 24 | 21 | 21 |
| | T (50%) ⁽³⁾ | °C | 133.5 | 132.2 | 132.2 |
| | Concentration of PE solution | mass % | 25 | 25 | 30 |
| | Blending condition Q⁽⁴⁾/Ns⁽⁴⁾ | kg/h/rpm | 0.3 | 0.075 | 0.6 |
| | Stretching temperature | °C | 114 | 114 | - |
| | Stretching magnification (MD × TD) | | 5 × 5 | 5 × 5 | - |
| Membrane producing conditions | Deformation speed | %/sec | 100 | 20 | - |
| | Re-stretching temperature | °C | - | - | - |
| | Re-stretching direction | | - | - | - |
| | Re-stretching magnification | | - | - | - |
| | Annealing treatment temperature | °C | - | - | - |
| | Annealing direction | | - | - | - |
| | Annealing shrinkage rate | | - | - | - |
| | Heat setting treatment temperature | °C | 120 | 120 | - |
| | Heat setting treatment time | min | 10 | 10 | - |
| | Average membrane thickness | µm | 20 | 21 | - |
| | Air resistance | sec/100ccAir | 420 | 498 | - |
| | Pin puncture strength | mN/20µm | 5018 | 3254 | - |
| | Tensile rupture strength (MD) | kPa | 127400 | 80360 | - |
| Properties of microporous polyolefin membrane | Tensile rupture strength (TD) | kPa | 117600 | 64680 | - |
| | Tensile rupture elongation (MD) | % | 170 | 70 | - |
| | Tensile rupture elongation (TD) | % | 240 | 110 | - |
| | Shutdown start temperature | °C | 124.0 | 121.5 | - |
| | Shutdown speed | sec/100cc/°C | 14100 | 9700 | - |
| | Shutdown temperature | °C | 133.4 | 132.8 | - |
| | Shrinkage rate (TD) | % | 27 | 10 | - |
| | Meltdown temperature | °C | 160.4 | 144.4 | - |
| | Varnish | | a | a | - |
| Coating process | Coating surface(s) | | one surface | one surface | - |
| | Coating thickness | µm | 2 | 2 | - |
| | Average membrane thickness | µm | 22 | 23 | - |
| | Air resistance | sec/1 00ccAir | 416 | 583 | - |
| Properies of battery separator | Shutdown temperature | °C | 134.4 | 137.7 | - |
| | Shutdown temperature difference ⁽⁵⁾ | °C | 1.0 | 4.9 | - |
| | Meltdown temperature | °C | > 200 | > 200 | - |
| | Heat restance (Shrinkage rate) | % | 5.3 | 1.5 | - |
| | Adhesion to electrode | | good | good | - |

From Table 1, it can be seen that the microporous polyethylene membranes of Examples 1 to 8 had a shutdown start temperature of 130°C or lower, a shutdown speed of 10,000 sec/100 cc/°C or more, a shrinkage rate at 130°C of 20% or less, a shutdown temperature of 135°C or lower, and a meltdown temperature of 150°C or higher, indicating that they had excellent heat shrinkage resistance, shutdown properties, and meltdown properties. They also had excellent permeability and mechanical strength. It can be seen that the battery separators obtained by laminating a modifying porous layer on these microporous polyethylene membranes had a small difference between the shutdown temperature of a microporous polyolefin membrane and the shutdown temperature of a battery separator and extremely excellent heat resistance.

In contrast, the battery separator of Comparative Example 1 had poor adhesion to electrode because a modifying porous layer was not laminated. The microporous polyethylene membrane of Comparative Example 2 had a T (50%) higher than 135°C and, therefore, had a high shutdown start temperature and shutdown temperature compared to those of the membranes of Examples 1 to 8 and a low shutdown speed less than 8,000 sec/100 cc/°C. The battery separator obtained by laminating a modifying porous layer on this microporous polyethylene membrane had a shutdown temperature significantly higher than that of the microporous polyolefin membrane.

Since the microporous polyethylene membranes of Comparative Examples 3 to 5 had a ΔHm (≤ 125°C) of more than 20%, and, in particular, the microporous polyethylene membrane of Comparative Example 5 was stretched at a deformation speed of more than 80%/sec, they all had poor heat shrinkage resistance compared to the microporous polyethylene membranes of Examples 1 to 8. Consequently, the battery separators on which a modifying porous layer was laminated were also significantly inferior to the battery separators of Examples 1 to 8.

In producing the microporous polyolefin membrane of Comparative Example 6, since the ratio of the rate Q of feeding the polyethylene composition into the extruder to a screw rotation speed Ns was less than 0.1 kg/h/rpm, the polyethylene composition experienced excessive shear failure and therefore had a lower meltdown temperature than those of the microporous polyethylene membranes of Examples 1 to 8. Further, the shutdown speed was 10,000 sec/100 cc/°C or lower, and the battery separator obtained by laminating a modifying porous layer on this microporous polyethylene membrane had a shutdown temperature significantly higher than that of the microporous polyolefin membrane.

### INDUSTRIAL APPLICABILITY

The battery separator according to the present invention is a battery separator having excellent heat resistance and adhesion to electrode as well as excellent shutdown properties, and can be suitably used particularly as a lithium ion secondary battery separator.

## Claims

1. A battery separator comprising a microporous polyolefin membrane and a modifying porous layer laminated on at least one surface of the microporous polyolefin membrane, the modifying porous layer containing a resin for providing or improving adhesion to electrode material, wherein the microporous polyolefin membrane comprises a polyethylene resin and has:
(a) a shutdown temperature (temperature at which the air resistance measured according to JIS P 8117 while heating at a temperature rise rate of 5°C/min reaches 1 × 10⁶ sec/100 cc) of 135°C or lower;
(b) a rate of air resistance change (a gradient of a curve representing dependency of the air resistance on temperature at an air resistance of 1 × 10⁴ sec/100 cc) of 1 × 10⁴ sec/100 cc/°C or more; and
(c) a transverse shrinkage rate at 130°C (measured by thermomechanical analysis under a load of 2 gf and at a temperature rise rate of 5°C/min) of 20% or less,
wherein the polyethylene resin shows a percentage of integrated endothermic amount up to 125°C in the crystal melting heat quantity measured by differential scanning calorimetry at a temperature rise rate of 10°C/min of 20% or less, and a temperature of 135°C or lower when the endothermic amount reaches 50% of the crystal melting heat, wherein the difference between the shutdown temperature of the microporous polyolefin membrane and the shutdown temperature of the battery separator is 2.5°C or less and wherein the modifying porous layer comprises a fluorine resin and particles selected from inorganic particles and cross-linked polymer particles.

2. The battery separator according to claim 1, wherein the polyethylene resin comprises a copolymer of ethylene and other α-olefins.

3. The battery separator according to claim 1 or 2, wherein the polyethylene resin comprises a copolymer of ethylene and other α-olefins, and the copolymer is produced using a single-site catalyst and has a mass average molecular weight of not less than 1 × 10⁴ and less than 7 × 10⁶.

4. The battery separator according to any one of claims 1 to 3, wherein the modifying porous layer comprises a fluorine resin and inorganic particles.

5. The battery separator according to any one of claims 1 to 3, wherein the modifying porous layer comprises a fluorine resin cross-linked polymer particles.

6. A battery separator according to any one of claims 1 to 5 wherein the amount of the particles is not less than 30% by weight and less than 98% by weight, based on the total modifying porous layer.

## Patentansprüche

1. Batterieseparator, der eine mikroporöse Polyolefinmembran und eine modifizierende poröse Schicht, die auf zumindest eine Oberfläche der mikroporösen Polyolefinmembran laminiert ist, umfasst, wobei die modifizierende poröse Schicht ein Harz zur Bereitstellung oder Verbesserung der Haftung an Elektrodenmaterial enthält, worin die mikroporöse Polyolefinmembran ein Polyethylenharz umfasst und Folgendes aufweist:
(a) eine Abschalttemperatur (Temperatur, bei der der gemäß JIS P 8117 gemessene Luftwiderstand bei Erhitzung mit einer Temperaturanstiegsgeschwindigkeit von 5 °C/min 1 x 10⁶ s/100 cm³ erreicht) von 135 °C oder weniger;
(b) eine Luftwiderstandveränderungsgeschwindigkeit (einen Gradienten einer Kurve, die die Abhängigkeit des Luftwiderstands von der Temperatur bei einem Luftwiderstand von 1 x 10⁴ s/100 cm³ darstellt) von 1 x 10⁴ s/100 cm³/°C oder mehr; und
(c) eine transversale Schrumpfungsrate bei 130 °C (gemessen mittels thermomechanischer Analyse unter einer Last von 2 gf und einer Temperaturanstiegsgeschwindigkeit von 5 °C/min) von 20 % oder weniger,
worin das Polyethylenharz einen Prozentanteil der integrierten endothermen Menge bis zu 125 °C in der durch Differentialscanningkalorimetrie gemessenen Höhe der Kristallschmelzwärme bei einer Temperaturanstiegsgeschwindigkeit von 10 °C/min von 20 % oder weniger und eine Temperatur von 135 °C oder weniger aufweist, wenn die endotherme Menge 50 % der Kristallschmelzwärme ausmacht, worin die Differenz zwischen der Abschalttemperatur der mikroporösen Polyolefinmembran und der Abschalttemperatur des Batterieseparators 2,5 °C oder weniger beträgt und worin die modifizierende poröse Schicht ein Fluorharz und aus anorganischen Teilchen und vernetzten Polymerteilchen ausgewählte Teilchen umfasst.

2. Batterieseparator nach Anspruch 1, worin das Polyethylenharz ein Copolymer von Ethylen und anderen α-Olefinen umfasst.

3. Batterieseparator nach Anspruch 1 oder 2, worin das Polyethylenharz ein Copolymer von Ethylen und anderen α-Olefinen umfasst und das Copolymer unter Verwendung eines Einzelstellenkatalysators hergestellt wird und ein massenmittleres Molekulargewicht von nicht weniger als 1 x 10⁴ und weniger als 7 x 10⁶ aufweist.

4. Batterieseparator nach einem der Ansprüche 1 bis 3, worin die modifizierende poröse Schicht ein Fluorharz und anorganische Teilchen umfasst.

5. Batterieseparator nach einem der Ansprüche 1 bis 3, worin die modifizierende poröse Schicht ein mit Polymerteilchen vernetztes Fluorharz umfasst.

6. Batterieseparator nach einem der Ansprüche 1 bis 5, worin die Menge der Teilchen nicht weniger als 30 Gew.-% und weniger als 98 Gew.-%, bezogen auf die gesamte modifizierende poröse Schicht, beträgt.

## Revendications

1. Séparateur de pile comprenant une membrane polyoléfinique microporeuse et une couche poreuse de modification stratifiée sur au moins une surface de la membrane polyoléfinique microporeuse, la couche poreuse de modification contenant une résine destinée à fournir ou améliorer l'adhérence sur un matériau d'électrode, la membrane polyoléfinique microporeuse comprenant une résine de polyéthylène et ayant :
(a) une température d'arrêt (température à laquelle la résistance à l'air mesurée selon la norme JIS P 8117 tout en chauffant à une vitesse d'augmentation de température de 5 °C/min atteint 1 x 10⁶ sec/100 cm³) inférieure ou égale à 135 °C ;
(b) une vitesse de modification de la résistance à l'air (un gradient d'une courbe représentant la dépendance de la résistance à l'air sur la température à une résistance à l'air de 1 x 10⁴ sec/100 cm³) supérieure ou égale à 1 x 10⁴ sec/100 cm³/°C ; et
(c) un taux de rétrécissement transversal à 130 °C (mesuré par analyse thermomécanique sous une charge de 2 gf et à une vitesse d'augmentation de température de 5 °C/min) inférieur ou égal à 20 %, la résine de polyéthylène montrant un pourcentage de quantité endothermique intégrée allant jusqu'à 125 °C dans la quantité de chaleur de fusion du cristal mesurée par calorimétrie à balayage différentiel à une vitesse d'augmentation de température de 10 °C/min inférieur ou égal à 20 %, et une température inférieure ou égale à 135 °C lorsque la quantité endothermique atteint 50 % de la chaleur de fusion du cristal, la différence entre la température d'arrêt de la membrane polyoléfinique microporeuse et la température d'arrêt du séparateur de pile étant inférieure ou égale à 2,5 °C, et la couche poreuse de modification comprenant une résine fluorée et des particules choisies parmi les particules inorganiques et les particules de polymère réticulé.

2. Séparateur de pile selon la revendication 1, dans lequel la résine de polyéthylène comprend un copolymère d'éthylène et d'autres α-oléfines.

3. Séparateur de pile selon la revendication 1 ou 2, dans lequel la résine de polyéthylène comprend un copolymère d'éthylène et d'autres α-oléfines, et le copolymère est produit en utilisant un catalyseur à site unique et a un poids moléculaire moyen en masse de pas moins de 1 x 10⁴ et de moins de 7 x 10⁶.

4. Séparateur de pile selon l'une quelconque des revendications 1 à 3, dans lequel la couche poreuse de modification comprend une résine fluorée et des particules inorganiques.

5. Séparateur de pile selon l'une quelconque des revendications 1 à 3, dans lequel la couche poreuse de modification comprend des particules de polymère réticulé de résine fluorée.

6. Séparateur de pile selon l'une quelconque des revendications 1 à 5, dans lequel la quantité des particules n'est pas inférieure à 30 % en poids et est inférieure à 98 % en poids, par rapport à la couche poreuse de modification totale.
